# EUROPÄISCHE PATENTSCHRIFT

(11) **EP 1 365 179 B1**
(45) Veröffentlichungstag und Bekanntmachung des Hinweises auf die Patenterteilung: **20.04.2005**
(21) Anmeldenummer: 03017150.8
(22) Anmeldetag: 08.05.2001
(51) Int. Cl.: F16H 61/20, B60K 41/10

(54) **Steuersystem für ein Kraftfahrzeuggetriebe mit einem Drehmomentwandler oder einer hydrodynamischen Kupplung**
Control system for a motor vehicle transmission comprising a torque converter or a hydrodynamic clutch
Système de commande pour transmission de véhicule comportant un convertisseur de couple ou un embrayage hydrodynamique

(30) Priorität: 11.05.2000 DE 10023053
(43) Veröffentlichungstag der Anmeldung: 26.11.2003
(62) Teilanmeldung aus: 01938201.9
(73) Patentinhaber: ZF FRIEDRICHSHAFEN AG, 88038 Friedrichshafen (DE)
(72) Erfinder: Schiele, Peter, 88079 Kressbronn (DE)

(56) Entgegenhaltungen:
- WO-A-00/14434
- WO-A-98/33673
- US-A- 4 730 708
- US-A- 4 775 938
- US-A- 5 272 630

## Beschreibung

Die Erfindung bezieht sich auf ein Steuersystem für ein Getriebe mit einen Drehmomentwandler oder einer hydrodynamische Kupplung in einem Kraftfahrzeug, zum Steuern bzw. Regeln eines Anfahrvorganges des Kraftfahrzeugs, nach dem Oberbegriff von Anspruch 1, 4 oder 6.

Bei modernen Kraftfahrzeugen mit Dieselantriebsmotoren werden häufig Motoren mit Abgasaufladung eingesetzt. Aus ökologischen Gesichtspunkten heraus wird ein nahezu rauchfreier Betrieb des Dieselmotors im gesamten Betriebsbereich angestrebt. Hierzu darf jeweils nur soviel Kraftstoff eingespritzt werden, wie mit der über den Abgasturbolader geförderten Luftmasse rußfrei verbrannt werden kann. Im Leerlauf des Motors ist die geförderte Luftmasse entsprechend gering. Das Anfahrverhalten eines solchermaßen motorisierten Kraftfahrzeugs kann für den Fahrer subjektiv als nicht zufriedenstellend empfunden werden, speziell bei einer schnellen und hohen Leistungsanforderung. Unmittelbar im Anfahrvorgang begrenzt der Drehzahlanstieg der Abgasturbine und der damit verbundene Anstieg des Luftmassendurchsatzes die eingespritzbare Kraftstoffmenge zur Leistungsanhebung, um ein "Rußen" gerade noch zu vermeiden. Erst mit zunehmender Motordrehzahl steigt der Luftmassendurchsatz, dazu die Einspritzmenge des Kraftstoffs und folglich das Motormoment. Ensprechend flach ist der Drehmomentenanstieg zu Beginn des Anfahrvorgangs, gefolgt von einem stark progressiven Drehmomentenaufbau.

Eine ähnliche Problematik ergibt sich bei Verwendung eines abgasaufgeladenen Ottomotors. Hier sind die ökologischen Regularien die Abgaszusammensetzung im Leerlaufbetrieb und bei der Anfettung des Kraftstoff-Luft-Gemisches beim Anfahren. Die dem Motor durch die Aufladung zugeführte Luftmasse ist unmittelbar von der Drehzahl der Abgasturbine abhängig. Der Drehzahlhochlauf der Abgasturbine erfolgt stets mit einem gewissen Zeitversatz zur Leistungsanforderung (Gaspedalbewegung) des Fahrers, je nach Größe der Abgasturbine mehr oder weniger. Der Fahrer spürt dies als unerwünscht langsamen Aufbau des Abtriebsmomentes des Fahrzeugs, üblicherweise als "Turbo-Loch" bezeichnet.

In Verbindung mit Wandlerautomatgetrieben läßt sich die Anfahrschwäche eines Kraftfahrzeugs mit abgasaufgeladenem Motor über die Charakteristik des Drehmomentwandlers (Trilok-Wandlers) positiv beeinflussen. Üblicherweise ist im Wandler eine Überbrückungskupplung vorgesehen, über die die hydraulische Leistungsübertragung mechanisch überbrückt werden kann, zur Reduzierung von Schlupfverlusten im Betrieb mit höheren Fahrzeuggeschwindigkeiten. Die hydrodynamische Drehmomentübertragung bewirkt einen ruckfreien Anfahrvorgang mit entsprechend hohem Komfort. Nachteilig für die Anfahrdynamik ist jedoch, daß die Motordrehzahl gegen das Aufnahmemoment des Drehmomentwandlers hochlaufen muß. Dazu addieren sich die obligatorisch ebenfalls vorhandenen weiteren Schleppmomente des Antriebsstrangs als Verluste. Da das Aufnahmemoment eines Wandlers mit hoher Momentenverstärkung ("weiche" Wandler-Kennung) geringer ist als das bei einem Wandler mit niedriger Momentenverstärkung ("harte" Wandler-Kennung), läßt sich die beschriebene Anfahrschwäche zum Teil kompensieren, allerdings auf Kosten eines "gummiband-ähnlichen" Führungsverhaltens der Motordrehzahl aufgrund der weichen Kennung. Speziell bei Kälte nimmt das Wandleraufnahmemoment generell stark zu, wodurch sich die Anfahrschwäche noch weiter verschlechtert.

Wird anstelle einer Trilok-Wandlers eine hydrodynamische Kupplung eingesetzt, ergibt sich eine ähnliche Problematik. Durch das gegenüber dem Drehmomentwandler fehlende Leitrad kann das Drehmoment des Motors nicht verstärkt werden, wodurch sich ein weiterer Nachteil im zügigen Aufbau des Abtriebsmomentes des Kraftfahrzeugs ergibt. Häufig wird auch eine hydrodynamische Kupplung mit einer Überbrückungskupplung kombiniert, um bei höheren Fahrzeuggeschwindigkeiten die Schlupfverluste zu eliminieren.

Aus der US 4,775,938 ist ein Verfahren zur Steuerung eines Anfahrvorgangs eines Fahrzeugs mit einem Wandler-Automatgetriebe bekannt, bei dem beim Anfahren des Fahrzeugs die Differenzdrehzahl einer Anfahrkupplung, die dem Drehmomentwandler nachgeschaltet ist, über einen Gradienten der Kupplungseingangsdrehzahl zu regeln, unter Berücksichtigung einer Gaspedalstellung des Motors als Lastvorgabe bei der Kupplungsdruckberechnung.

Aus der gattungsbildenden US 5,272,630 ist ein Verfahren zur Steuerung eines Anfahrvorgangs eines Fahrzeugs mit einem Wandler-Automatgetriebe aus einer Standabkoppelungs-Funktion heraus bekannt, also eines Anfahrvorgangs mit zuvor geöffneter Anfahrkupplung. Der Wandlerschlupf wird über die wieder zuschaltende Anfahrkupplung auf eine Soll-Differenzdrehzahl eingeregelt. Eine Lastvorgabe des Fahrers wirkt in dem vorgeschlagenen Regelkreis als Störgröße.

Beide Verfahren führen in Verbindung mit dem zuvor beschriebenen Problem der Anfahrschwäche eines Antriebsstrangs mit abgasaufgeladenem Dieselmotor und Wandlerautomatgetriebe zu keinen befriedigenden Anfahrleistungen, da das Drehzahl-Hochlaufverhalten und die tatsächliche Leistungsentfaltung des Antriebsmotors bei der Kupplungsregelung unberücksichtigt bleiben und der Schließvorgang der Anfahrkupplung also als Störgröße auf den Drehzahlhochlauf des Antriebsmotors wirkt.

Der Erfindung liegt die Aufgabe zugrunde, ein Steuersystem zu schaffen, mit dem das Anfahrverhalten eines Getriebes, das einen Drehmomentenwandler oder eine hydrodynamische Kupplung sowie eine im Getriebe angeordnete, drehmomentführende und regelbare Kupplung oder Bremse aufweist, verbessert wird.

Diese Aufgabe wird mit einem Steuersystem gelöst, welches die Merkmale der Anspruche 1, 4 oder 6 aufweist. Weitere vorteilhafte Ausgestaltungen des erfindungsgemäßen Steuersystems ergeben sich aus den Unteransprüchen.

Erfindungsgemäß wird also vorgeschlagen, im Anfahrvorgang des Kraftfahrzeugs die Anfahrleistung über eine drehmomentführende schlupfende Kupplung oder Bremse, die im Getriebe angeordnet ist, als Funktion eines Fahrerwunsches zu regeln, wobei Kenngrößen des Drehmomentwandlers bzw. der hydrodynamischen Kupplung berücksichtigt werden.

In vorteilhafter Weise kann über den Schlupf in der drehmomentführenden Kupplung bzw. Bremse der Drehzahl-Hochlauf des antreibenden Motors gezielt gesteuert bzw. eingeregelt werden. Auf diese Weise wird beispielsweise ein eingangs beschriebenes "Turbo-Loch" in der Anfahrleistung eines Fahrzeugs mit abgasaufgeladenem Verbrennungsmotor wirkungsvoll verhindert.

In dem Maße, wie die drehmomentführende Kupplung bzw. Bremse im Anfahrvorgang des Kraftfahrzeugs geöffnet, also in Schlupf begracht wird, reduziert sich das vom Motor aufzubringende hydraulische Aufnahmemoment des Drehmomentwandlers bzw. der hydraulischen Kupplung.

Im Extremfall wird die drehmomentführende Kupplung bzw. Bremse kurzzeitig vollständig oder fast vollständig bis zum Anlegepunkt des Kolbens der Kupplung bzw. Bremse geöffnet, sodaß der Motor bei einer Leistungsanforderung durch den Fahrer (Gaspedalbetätigung) quasi frei hochdrehen kann. Der Motorhochlauf wird im Extremfall also nur durch die rotatorische Massenträgheit und die Reibungsverluste des Motors, sowie durch die rotatorische Massenträgheit der drehenden Getriebebauteile in Kraftflußrichtung bis zur geöffneten Kupplung bzw. Bremse mit den entsprechenden Reibungsverlustanteilen des Getriebes behindert, der Verlustanteil des Wandleraufnahmemomentes entfällt vollständig.

Vorteilhaft vor und zu Beginn des Anfahrvorganges ist eine Reduzierung des Druckes in der drehmomentführenden Kupplung bzw. Bremse auf einen Wert knapp oberhalb des Fülldruckes der Kupplung bzw. Bremse, der Kolbens der Kupplung bzw. Bremse verbleibt also am Anlegepunkt der Reibungselemente und es wird ein geringes Drehmoment übertragen. Auf diese Weise kann der Schließvorgang der Kupplung bzw. Bremse ohne fülltechnisch bedingte Totzeiten für den Fahrer stoßfrei und komfortabel geregelt werden.

In Versuchen hat sich herausgestellt, daß ein geringer Zeitversatz zwischen der Leistungsanforderung des Fahrers und dem Losrollen des Fahrzeugs, also dem Anstieg der Abtriebsdrehzahl des Getriebes, nicht als negativ empfunden wird, insbesondere wegen der akustischen Wahrnehmung der ansteigenden Motordrehzahl unmittelbar auf die Gaspedalbetätigung hin. Zweckmäßigerweise wird der Schlupfregelung der Kupplung bzw. Bremse derart ausgeführt, daß sich ein fahrzeug- und vor allem motorspezifisches Optimum an Anfahrleistung ergibt.

In vorteilhafter Weise kann im Fahrzeug eine fahrdynamisch günstige "straffe" oder auch "harte" Kennung des Drehmomentwandlers bzw. der hydrodynamischen Kupplung vorgesehen werden, mit entsprechend direktem Führungsverhalten der Motordrehzahl bei Gaspedaländerungen durch den Fahrer im überwiegenden Fahrbetrieb, in dem eine Überbrückungskupplung des Wandlers geöffnet ist.

Der Einsatz des erfindungsgemäßen Steuersystems ist dabei nicht auf ein Automatgetriebe beschränkt, es eignet sich beispielsweise sowohl für ein Stufenautomatgetriebe, ein CVT(Continuos Variable Transmission)-Getriebe, IVT(Infinetely Vaiable Transmission)-Getriebe als auch für ein nichtautomatisiertes oder automatisiertes Handschaltgetriebe, jeweils in Verbindung mit einem vorhandenen Drehmomentwandler oder einer hydrodynamischer Kupplung, und mit einer im Anfahrvorgang drehmomentführenden regelbaren Kuppung oder Bremse im Getriebe.

Ein Drehmomentwandler und eine hydrodynamischen Kupplung weisen eine Turbine auf, die drehmomentführend mit der Getriebeeingangswelle verbunden ist.

In einer ersten erfindungsgemäßen Lösung der Aufgabe wird vorgeschlagen, im Anfahrvorgang des Kraftfahrzeugs eine Turbinendrehzahl n_T der Turbinedes Drehmomentwandlers bzw. der hydrodynamischen Kupplung, insbesondere einen zeitlichen Turbinendrehzahlverlauf n_T(t), über eine drehmomentführende Kupplung oder Bremse, die im Getriebe angeordnet ist, als Funktion eines Fahrerwunsches zu regeln. In vorteilhafter Weise kann hierdurch insbesondere in Verbindung mit typabhängigen, konstruktiv bekannten Kenngrößen des Drehmomentwandlers bzw. der hydrodynamischen Kupplung die Motordrehzahl n_Mot in einfacher Weise so geführt werden, daß für den Fahrer beim Anfahren stets eine gut nachvollziehbare Korrelation zwischen seiner Gaspedalbewegung und dem Motorfolgeverhalten gegeben ist.

In einer Ausgestaltung zur Regelung der Turbinendrehzahl n_T kann vorgesehen sein, deren Gradienten dn_T/dt als Regelgröße zu verwenden. Der hierdurch erzielbare Vorteil in der Regeldynamik wirkt sich durch die Vermeidung von spürbaren Überschwingern der Motordrehzahl als Folge einer zu späten druckseitigen Reaktion in der drehmomentführenden Kupplung bzw. Bremse, insbesondere bei einer schnellen und hohen Leistungsanforderung, positiv sowohl im Anfahrkomfort als auch in der Sicherheit gegen Kupplungsschäden aus.

In einer Weiterbildung der Regelung der Turbinendrehzahl n_T, des zeitlichen Verlaufs n_T(t) der Turbinendrehzahl oder des Turbinendrehzahl-Gradienten dn_T/dt kann vorgesehen sein, daß die jeweilige Regelgröße n_T, n_T(t) bzw. dn_T/dt eine Funktion vom Abstand zum Synchronpunkt des Schließvorgangs der drehmomentführenden Kupplung bzw. Bremse ist. Hierdurch kann der Schließkomfort der Kupplung bzw. Bremse insbesondere im Bereich kleiner Schlupfdrehzahlen weiter verbessert werden.

Neben der Turbine weisen Drehmomentwandler und hydrodynamische Kupplung eine Pumpe auf, die drehmomentführend mit dem antreibenden Motor verbunden ist. Die Leistungsübertragung erfolgt hydrodynamisch von der Pumpe zur Turbine. In einer zweiten erfindungsgemäßen Lösung der Aufgabe wird daher vorgeschlagen, im Anfahrvorgang des Kraftfahrzeugs ein Drehzahlverhältnis nue, welches als Quozient von Turbinendrehzahl n_T und Pumpendrehzahl n_P des Drehmomentwandlers bzw. der hydrodynamischen Kupplung definiert ist, über eine drehmomentführende Kupplung oder Bremse, die im Getriebe angeordnet ist, als Funktion eines Fahrerwunsches zu regeln, insbesondere unter Berücksichtigung des verwendeten Wandlertyps (Drehmomentwandler oder hydrodynamische Kupplung) und/oder einer Temperatur.

Als Kenngrößen des Wandlertyps sind insbesondere die bekannten konstruktiven Auslegungswerte maximale Wandlerverstärkung mue_max, Wandlerpumpenmoment M_P2000 (bei einer Antriebsdrehzahl von 2000 l/min) anzusehen, aber auch die bekannten Wandlerdiagramme mit den Funktionen Pumpenmoment M_P = f(Pumpendrehzahl n_P), Momentenverhältnis mue = f(Drehzahlverhältnis nue) mit mue = Turbinenmoment M_T / Pumpenmoment M_P und nue = n_T / n_P, Wandlerwirkungsgrad = f(Drehzahlverhältnis nue), Turbinenmoment M_T = f(Turbinendrehzahl n_T), Pumpendrehzahl n_P = f(Turbinendrehzahl n_T), Wandlerwirkungsgrad = f(Turbinendrehzahl n_T).

Als Temperatur zur Berücksichtigung in der Regelung ist insbesondere die Getiebeöltemperatur vorzusehen, da diese im wesentlichen Maß den Wirkungsgrad des hydrodynamischen Kreislaufs im Drehmomentwandler bzw. in der hydrodynamischen Kupplung und damit das Aufnahmemoment beeinflußt. Als Ersatzgrößen für die Getriebeöltemperatur kann auch eine Motoröltemperatur, eine Kühlwassertemperatur oder auch eine Außenlufttemperatur verwendet werden. Anstelle einer sensierten Temperatur kann auch eine über ein geeignetes Temperaturmodell berechnete fiktive Temperatur verwendet werden.

Somit ist in vorteilhafter Weise ein regelungstechnisch einfacher Bezug zu den typabhängigen, konstruktiv bekannten Kenngrößen des Drehmomentwandlers bzw. der hydrodynamischen Kupplung gegeben. Insbesondere durch die Berücksichtigung der Getriebeöltemperatur (oder einer entsprechenden Ersatz-Temperatur) kann die Anfahrleistung eine Fahrzeugs mit abgasaufgeladenem Verbrennungsmotor bei tiefen Temperaturen deutlich verbessert werden, wenn beispielsweise die Schlupfzeit der drehmomentführenden Kupplung bzw. Bremse zu tiefen Temperaturen hin verlängert wird, oder wenn der Zeitanteil mit großem Kupplungsschlupf unmittelbar zu Beginn des Anfahrvorgangs zu tiefen Temperaturen hin vergrößert wird.

In einer Weiterbildung der Regelung des Drehzahlverhältnisses nue kann vorgesehen sein, daß für die Motordrehzahl n_Mot ein Sollwert n_Mot_soll oder ein zeitlicher Sollwert-Verlauf n_Mot_soll(t) vorgegeben wird. Hierdurch wird einerseits der Vorteil einer guten Abstimmbarkeit auf eine Turbolader-Charakteristik erzielt, die Möglichkeit zur Verbesserung der Anfahrleistung des Kraftfahrzeugs durch gezielten Motorhochlauf also einfach erschlossen. Andererseits wird auch das Führungsverhaltens der Motordrehzahl n_Mot auf Gaspedaländerungen des Fahrers subjektiv vorteilhaft empfunden.

In weiteren Ausgestaltungen der Erfindung wird vorgeschlagen, im Anfahrvorgang des Kraftfahrzeugs eine Geschwindigkeit v_Fzg des Kraftfahrzeugs, insbesondere deren zeitlicher Verlauf v_Fzg(t), über eine drehmomentführende Kupplung oder Bremse, die im Getriebe angeordnet ist, als Funktion eines Fahrerwunsches zu regeln. Vorteilhaft ist hierbei insbesondere die gute regelungstechnische Korrelation zum subjektiven Empfinden des Fahrers, der seine angeforderte Fahrleistung stets als Fahrzeugbeschleunigung und Geschwindigkeitszuwachs spürt.

Der Fahrerwunsch als Eingangsgröße des erfindungsgemäßen Steuerungssystems kann in bekannter Weise beispielsweise direkt aus einer Gaspedalbewegung, also einem Gaspedalweg und/oder einer Gaspedalgeschwindigkeit, oder aus einer Stellung bzw. Veränderung einer Leistungssteuereinrichtung am Antriebsmotor gebildet werden. Als Fahrerwunsch kann auch ein berechneter Wert verwendet werden, der als Ausgangsgröße eines E-Gas-Systems oder des Motorsteuergerätes vorliegt, beispielsweise ein Fahrpedalwert, eine Fahrpedalgeschwindigkeit, eine Leistungsanforderung, eine Motormomentenvorgabe, ein Luftmassensignal des Motors oder eine Kraftstoff-Einspritzmenge. Selbstverständlich kann der Fahrerwunsch auch durch mehrere parallele Signale definiert sein, sowie weitere Fahrzeugsysteme - beispielsweise ein Fahrzeug-Bremssystem, eine Geschwindigkeitsregelanlage oder ein Verkehrs-Leitsystem - in die Generierung miteinbezogen sein.

Erfindungsgemäß wird nun vorgeschlagen, den Fahrerwunsch in die Regelung der Anfahrleistung, der Turbinendrehzahl n_T bzw. n_T(t), des Turbinendrehzahlgradienten dn_T/dt, des Drehzahlverhältnisses nue, des Drehmomentverhältnisses mue und der Fahrzeuggeschwindigkeit v_Fzg bzw. v_Fzg(t) einzubeziehen. Aus dem Fahrerwunsch wird hierbei ein Sollwert für die Regelung gebildet, insbesondere ein zeitlicher Sollwertverlauf oder ein Sollgradient.

Dabei kann vorgesehen sein, für die Regelung aus dem Fahrerwunsch ein Abtriebsdrehzahl-Sollwert n_Ab_soll und insbesondere einen zeitlichen Abtriebsdrehzahl-Sollverlauf n_Ab_soll(t) und/oder einen Abtriebsdrehzahl-Sollgradienten dn_Ab_soll/dt bzw. dazu äquivalente Größen zu bilden.

Es kann aber auch vorgesehen sein, für die Regelung aus dem Fahrerwunsch einen Motordrehzahl-Sollwert n_Mot_soll und insbesondere einen zeitlichen Motordrehzahl-Sollverlauf n_Mot_soll(t) und/oder einen Motordrehzahl-Sollgradienten dn_Mot_soll/dt zu bilden oder aber einen Geschwindigkeits-Sollwert v_Fzg_soll des Fahrzeugs, insbesondere dessen zeitlichen Sollverlauf v_Fzg_soll/dt.

Um die Spontanität der Anfahrvorgangs weiter zu verbessern, ist es vorteilhaft, in der Regelung der Anfahrleistung, der Turbinendrehzahl n_T bzw. n_T(t), des Turbinendrehzahlgradienten dn_T/dt, des Drehzahlverhältnisses nue, des Drehmomentverhältnisses mue und der Fahrzeuggeschwindigkeit v_Fzg bzw. v_Fzg(t) nicht nur das aktuell von dem Antriebsmotor zur Verfügung stehende Motormoment M_Mot während der Schlupfphase der drehmomentführenden Kupplung bzw. Bremse auszunutzen, sondern zusätzlich das rotatorische Moment, welches sich durch die Verzögerung von rotierenden Getriebebauteilen am Getriebeabtrieb abstützt. Ebenso wirkt sich die Einbeziehung rotatorischer Energieanteile des Motors in der Regelung positiv auf die Dynamik des Anfahrvorgangs aus. Am Beispiel einer Abtriebsmomenten-Regelung wird dies im folgenden kurz erläutert.

Das maximale für den Anfahrvorgang nutzbare Abtriebsmoment M_Ab_ges setzt sich in bekannter Weise zusammen aus einem dynamischem Motormoment M_Mot_dyn_Ab und einem rotatorischen Momentenanteil M_rot_dyn_Ab der drehenden Getriebekomponenten incl. Drehmomentwandler bzw. hydrodynamischer Kupplung, jeweils mathematisch bezogen auf den Getriebeabtrieb unter Berücksichtigung der Getriebeübersetzung. Das dynamische Motormoment M_Mot_dyn_Ab ergibt sich dabei aus der innermotorischen Umsetzung der Leistungsanforderung des Fahrers. Das während der Schlupfphase der Kupplung bzw. Bremse übertragene Drehmoment ist primär durch die druckseitig aufgebrachte Normalkraft auf die Reibflächen, durch den Reibwert der Reibflächen und durch den Reibradius bestimmt.

Es hat sich dabei als vorteilhaft erwiesen, das dynamische Motormoment M_Mot_dyn_Ab für die Druckberechnung der drehmomentführenden Kupplung bzw. Bremse während deren Schlupfphase aus einem indizierten Motormoment M_Mot_ind zu berechnen, insbesondere in Hinblick auf die sich während des Anfahrvorgangs ansteigende Motordrehzahl n_Mot und der für diesen Motorhochlauf benötigten Energie mit dem entsprechenden Einfluß auf das Getriebeeingangsmoment. Üblicherweise wird das indizierte Motormoment M_Mot_ind von der Motorsteuerung auf Basis vieler motortechnischer Einflußgrößen berechnet und anderen Steuergeräten in Kraftfahrzeug zu deren Nutzung zur Verfügung gestellt. In Kombination mit einem Drehmomentwandler ist selbstverständlich noch die aktuelle Wandlerverstärkung mue bzw. der Turbinenmomentenverlauf M_T(t), M_T(n_T) zu berücksichtigen.

### Bezugszeichen

- v_Fzg: Geschwindigkeit des Kraftfahrzeugs
- v_Fzg(t): zeitlicher Verlauf der Geschwindigkeit
- v_Fzg_soll: Sollwert der Geschwingigkeit
- v_Fzg_soll(t): zeitlicher Sollverlauf der Geschwindigkeit

- n_Mot: Motordrehzahl
- n_Mot (t): zeitlicher Verlauf der Motordrehzahl
- dn_Mot/dt: Gradient der Motordrehzahl
- n_Mot_soll: Sollwert der Motordrehzahl
- n_Mot_soll(t): zeitlicher Sollverlauf der Motordrehzahl
- dn_Mot_soll/dt: Sollgradient der Motordrehzahl

- M_Mot: Motormoment
- M_Mot_dyn_Ab: dynamisches Motormoment, reduziert auf die Abtriebsdrehzahl
- M_Mot_ind: indiziertes Motormoment
- M_rot_dyn_Ab: rotatorisches Moment des Getriebes, reduziert auf die Abtriebsdrehzahl

- n_P: Pumpendrehzahl des Drehmomentwandlers bzw. der hydrodynamischen Kupplung
- n_T: Turbinendrehzahl des Drehmomentwandlers bzw. der hydrodynamischen Kupplung
- n_T(t): zeitlicher Verlauf der Turbinendrehzahl
- dn_T/dt: Gradient der Turbinendrehzahl
- nue: Drehzahlverhältnis des Drehmomentwandlers bzw. der hydrodynamischen Kupplung; nue = n_T / n_P

- M_P: Pumpenmoment des Drehmomentwandlers bzw. der hydrodynamischen Kupplung
- M_T: Turbinenmoment des Drehmomentwandlers bzw. der hydrodynamischen Kupplung
- mue: Wandlerverstärkung des Drehmomentwandlers; mue = M_T / M_P

- n_Ab: Abtriebsdrehzahl des Getriebes
- n_Ab(t): zeitlicher Verlauf der Abtriebsdrehzahl
- dn_Ab/dt: Gradient der Abtriebsdrehzahl des Getriebes
- n_Ab_soll: Sollwert der Abtriebsdrehzahl
- n_Ab_soll(t): zeitlicher Sollverlauf der Abtriebsdrehzahl
- dn_Ab_soll/dt: Sollgradient der Abtriebsdrehzahl

## Patentansprüche

1. Steuersystem für ein Getriebe mit einem Drehmomentwandler oder einer hydrodynamischen Kupplung in einem Kraftfahrzeug, mit mindestens einer im Anfahrvorgang des Kraftfahrzeugs drehmomentführenden Kupplung oder Bremse, wobei die Anfahrleistung des Kraftfahrzeugs über eine im Getriebe angeordnete schlupfende Kupplung oder Bremse als Funktion eines Fahrerwunsches geregelt wird, **dadurch gekennzeichnet, dass** beim Anfahren des Kraftfahrzeugs ein Drehzahlverhältnis (nue) des Drehmomentwandlers bzw. der hydrodynamischen Kupplung über die im Getriebe angeordnete schlupfende Kupplung bzw. Bremse als Funktion des Fahrerwunsches geregelt wird, welches als Funktion
- eines Verhältnisses einer Turbinendrehzahl (n_T) zu einer Pumpendrehzahl (n_P) des Drehmomentwandlers und/oder
- eines Wandlertyps und/oder
- einer Temperatur
definiert ist,
zusätzlich unter Einbeziehung von einer oder mehreren der folgenden Kenngrößen des Drehmomentwandlers bzw. der hydrodynamischen Kupplung
- Typ des Drehmomentwandlers bzw. Typ der hydrodynamischen Kupplung,
- maximale Momentenverstärkung (mue_max) des Drehmomentwandlers,
- Pumpenmoment (M_P2000) des Drehmomentwandlers bei einer Antriebsdrehzahl von 2 000 1/min,
- Kennlinie (M_P = f(n_P)) eines Pumpenmoments (M_P) als Funktion einer Pumpendrehzahl (n_P),
- Kennlinie (M_T = f(n_T)) eines Turbinenmomentes (M_T) als Funktion einer Turbinendrehzahl (n_T),
- Kennlinie (M_P = f(n_T)) einer Pumpendrehzahl (n_P) als Funktion einer Turbinendrehzahl (n_T),
- Kennlinie (mue = f(nue)) eines Momentenverhältnisses (mue) als Funktion eines Drehzahlverhältnisses (nue), wobei das Momentenverhältnis (mue) als Quozient von Turbinenmoment (M_T) und Pumpenmoment (M_P) definiert ist, und wobei das Drehzahlverhältnis (nue) als Quozient von Turbinendrehzahl (n_T) und Pumpendrehzahl (n_P) definiert ist,
- Kennlinie eines Wirkungsgrades des Drehmomentwandlers bzw. der hydrodynamischen Kupplung als Funktion des Drehzahlverhältnisses (nue),
- Kennlinie eines Wirkungsgrades des Drehmomentwandlers bzw. der hydrodynamischen Kupplung als Funktion einer Turbinendrehzahl (n_T) .

2. Steuersystem nach Anspruch 1, **dadurch gekennzeichnet, dass** bei der Regelung des Drehzahlverhältnisses (nue) ein Motordrehzahl-Sollwert (n_Mot_soll) oder ein zeitlicher Motordrehzahl-Sollverlauf (n_Mot_soll(t)) vorgegeben wird.

3. Steuersystem nach Anspruch 1 oder 2, **dadurch gekennzeichnet, dass** die Temperatur aus einer Öltemperatur des Getriebes und/oder einer Öltemperatur des Motors und/oder aus einer Kühlmitteltemperatur des Motors und/oder aus einer Lufttemperatur und/oder aus einer über ein Modell berechneten fiktiver Temperatur bestimmt wird.

4. Steuersystem für ein Getriebe mit einem Drehmomentwandler oder einer hydrodynamischen Kupplung in einem Kraftfahrzeug, mit mindestens einer im Anfahrvorgang des Kraftfahrzeugs drehmomentführenden Kupplung oder Bremse,
wobei die Anfahrleistung des Kraftfahrzeugs über eine im Getriebe angeordnete schlupfende Kupplung oder Bremse als Funktion eines Fahrerwunsches geregelt wird, **dadurch gekennzeichnet,**
**dass** beim Anfahren des Kraftfahrzeugs eine Turbinendrehzahl (n_T) einer Turbine des Drehmomentwandlers bzw. der
hydrodynamischen Kupplung oder ein zeitlicher Turbinendrehzahl-Verlauf (n_T(t)) oder ein Turbinendrehzahl-Gradient (dn_T/dt) über die im Getriebe angeordnete schlupfende Kupplung bzw. Bremse als Funktion des Fahrerwunsches geregelt wird,
zusatzlich unter Einbeziehung von einer oder mehreren der folgenden Kenngrößen des Drehmomentwandlers bzw. der hydrodynamischen Kupplung
- Typ des Drehmomentwandlers bzw. Typ der hydrodynamischen Kupplung,
- maximale Momentenverstärkung (mue_max) des Drehmomentwandlers,
- Pumpenmoment (M_P2000) des Drehmomentwandlers bei einer Antriebsdrehzahl von 2 000 1/min,
- Kennlinie (M_P = f(n_P)) eines Pumpenmoments (M_P) als Funktion einer Pumpendrehzahl (n_P),
- Kennlinie (M_T = f(n_T)) eines Turbinenmomentes (M_T) als Funktion einer Turbinendrehzahl (n_T),
- Kennlinie (M_P = f(n_T)) einer Pumpendrehzahl (n_P) als Funktion einer Turbinendrehzahl (n_T),
- Kennlinie (mue = f(nue)) eines Momentenverhältnisses (mue) als Funktion eines Drehzahlverhältnisses (nue), wobei das Momentenverhältnis (mue) als Quozient von Turbinenmoment (M_T) und Pumpenmoment (M_P) definiert ist, und wobei das Drehzahlverhältnis (nue) als Quozient von Turbinendrehzahl (n_T) und Pumpendrehzahl (n_P) definiert ist,
- Kennlinie eines Wirkungsgrades des Drehmomentwandlers bzw. der hydrodynamischen Kupplung als Funktion des Drehzahlverhältnisses (nue),
- Kennlinie eines Wirkungsgrades des Drehmomentwandlers bzw. der hydrodynamischen Kupplung als Funktion einer Turbinendrehzahl (n_T).

5. Steuersystem nach Anspruch 4, **dadurch gekennzeichnet, dass** die Turbinendrehzahl (n_t) bzw. der zeitliche Turbinendrehzahl-Verlauf (n_T(t)) bzw. der Turbinendrehzahl-Gradient (dn_T/dt) eine Funktion vom Abstand zum Synchronpunkt des Schließvorgangs der schlupfenden Kupplung bzw. Bremse ist.

6. Steuersystem für ein Getriebe mit einem Drehmomentwandler oder einer hydrodynamischen Kupplung in einem Kraftfahrzeug, mit mindestens einer im Anfahrvorgang des Kraftfahrzeugs drehmomentführenden Kupplung oder Bremse,
wobei die Anfahrleistung des Kraftfahrzeugs über eine im Getriebe angeordnete schlupfende Kupplung oder Bremse als Funktion eines Fahrerwunsches geregelt wird, **dadurch gekennzeichnet,**
**dass** beim Anfahren des Kraftfahrzeugs eine Geschwindigkeit (v_Fzg) des Kraftfahrzeugs oder eine Abtriebsdrehzahl (n_ab) des Getriebes über die im Getriebe angeordnete schlupfende Kupplung bzw. Bremse als Funktion des Fahrerwunsches geregelt wird,
zusätzlich unter Einbeziehung von einer oder mehreren der folgenden Kenngrößen des Drehmomentwandlers bzw. der hydrodynamischen Kupplung
- Typ des Drehmomentwandlers bzw. Typ der hydrodynamischen Kupplung,
- maximale Momentenverstärkung (mue_max) des Drehmomentwandlers,
- Pumpenmoment (M_P2000) des Drehmomentwandlers bei einer Antriebsdrehzahl von 2 000 1/min,
- Kennlinie (M_P = f(n_P)) eines Pumpenmoments (M_P) als Funktion einer Pumpendrehzahl (n_P),
- Kennlinie (M_T = f(n_T)) eines Turbinenmomentes (M_T) als Funktion einer Turbinendrehzahl (n_T),
- Kennlinie (M_P = f(n_T)) einer Pumpendrehzahl (n_P) als Funktion einer Turbinendrehzahl (n_T),
- Kennlinie (mue = f(nue)) eines Momentenverhältnisses (mue) als Funktion eines Drehzahlverhältnisses (nue), wobei das Momentenverhältnis (mue) als Quozient von Turbinenmoment (M_T) und Pumpenmoment (M_P) definiert ist, und wobei das Drehzahlverhältnis (nue) als Quozient von Turbinendrehzahl (n_T) und Pumpendrehzahl (n_P) definiert ist,
- Kennlinie eines Wirkungsgrades des Drehmomentwandlers bzw. der hydrodynamischen Kupplung als Funktion des Drehzahlverhältnisses (nue),
- Kennlinie eines Wirkungsgrades des Drehmomentwandlers bzw. der hydrodynamischen Kupplung als Funktion einer Turbinendrehzahl (n_T).

7. Steuersystem nach einem oder mehrerer der vorigen Ansprüche, **dadurch gekennzeichnet, dass** zur Regelung der Kupplung oder Bremse aus dem Fahrerwunsch ein Geschwindigkeits-Sollwert (v_Fzg_soll) des Kraftfahrzeugs gebildet wird, insbesondere dessen zeitlicher Verlauf (v_Fzg_soll(t)).

8. Steuersystem nach einem oder mehrerer der vorigen Ansprüche, **dadurch gekennzeichnet, dass** zur Regelung der Kupplung oder Bremse aus dem Fahrerwunsch ein Abtriebsdrehzahl-Sollwert (n_Ab_soll) des Getriebes gebildet wird, insbesondere ein zeitlicher Abtriebsdrehzahl-Sollverlauf (n_Ab_soll(t)), und/oder ein Abtriebsdrehzahl-Sollgradient (dn_ab_soll/dt).

9. Steuersystem nach einem oder mehrerer der vorigen Ansprüche, **dadurch gekennzeichnet, dass** zur Regelung der Kupplung oder Bremse aus dem Fahrerwunsch ein Motordrehzahl-Sollwert (n_Mot_soll) eines das Getriebe antreibenden Motors gebildet wird, insbesondere ein zeitlicher Motordrehzahl-Sollverlauf (n_Mot_soll(t)), und/oder ein Motordrehzahl-Sollgradient (dn_Mot_soll/dt).

## Claims

1. The invention relates to a control system for a transmission with a torque converter or a hydrodynamic clutch in a motor vehicle, with at least one clutch or brake transmitting torque during the starting process of the vehicle, with the starting output of the motor vehicle being controlled as a function of the driver's request via a slipping clutch or brake arranged in the transmission, **characterized in that** during driveaway of the motor vehicle, a speed ratio (nue) of the torque converter or the hydrodynamic clutch is controlled as a function of the driver's request via a slipping clutch or brake arranged in the transmission, with this speed ratio being defined as a function
- of a ratio of a turbine speed (n_T) relative to a pump speed (n_P) of the torque converter
and/or
- of a converter type and/or
- of a temperature;
and with additional integration of one or several of the following parameters of the torque converter or the hydrodynamic clutch:
- type of torque converter or type of hydrodynamic clutch;
- maximum torque amplification (mue_max) of the torque converter;
- pump torque (M_P2000) of the torque converter with an engine speed of 2000 rpm;
- characteristic (M_P=f(n_P)) of a pump torque (M_P) as a function of a pump speed (n_P);
- characteristic (M_T=f(n_T)) of a turbine torque (M_T) as a function of a turbine speed
(n_T);
- characteristic (M_P=f(n_T)) of a pump speed (n_P) as a function of a turbine speed (n_T);
- characteristic (mue = f(nue)) of a torque ratio (mue) as a function of a speed ratio (nue), with
the torque ratio (mue) being defined as a quotient of turbine torque (M_T) and pump torque
(M_P), and with the speed ratio (nue) being defined as a quotient of turbine speed (n_T) and
pump speed (n_P);
- characteristic of an efficiency of the torque converter or the hydrodynamic clutch as a
function of the speed ratio (nue);
- characteristic of an efficiency of the torque converter or the hydrodynamic clutch as a
function of a turbine speed (n_T).

2. A control system according to claim 1, **characterized in that** an engine-speed nominal value (n_mot_nom) or a temporal engine-speed nominal value course (n_mot_nom(t)) is specified for speed ratio (nue) control.

3. A control system according to claim 1 or 2, **characterized in that** the temperature is determined on the basis of a transmission oil temperature and/or an engine oil temperature and/or an engine coolant temperature and/or an air temperature and/or a fictitious temperature calculated via a model.

4. A control system for a transmission with a torque converter or a hydrodynamic clutch in a motor vehicle, with at least one clutch or brake transmitting torque during the starting process of the vehicle, with the starting output of the motor vehicle being controlled as a function of the driver's request via a slipping clutch or brake arranged in the transmission, **characterized in that** during driveaway of the motor vehicle, a turbine speed (n_T) of a turbine of the torque converter or the hydrodynamic clutch or a temporal turbine speed course (n_T(t)) or a turbine speed gradient (dn_T/dt) is controlled as a function of the driver's request via a slipping clutch or brake arranged in the transmission,
and with additional integration of one or several of the following parameters of the torque converter or the hydrodynamic clutch:
- type of torque converter or type of hydrodynamic clutch;
- maximum torque amplification (mue_max) of the torque converter;
- pump torque (M_P2000) of the torque converter with an engine speed of 2000 rpm;
- characteristic (M_P=f(n_P)) of a pump torque (M_P) as a function of a pump speed (n_P);
- characteristic (M_T=f(n_T)) of a turbine torque (M_T) as a function of a turbine speed
(n_T);
- characteristic (M_P=f(n_T)) of a pump speed (n_P) as a function of a turbine speed (n_T);
- characteristic (mue = f(nue)) of a torque ratio (mue) as a function of a speed ratio (nue), with
the torque ratio (mue) being defined as a quotient of turbine torque (M_T) and pump torque
(M_P), and with the speed ratio (nue) being defined as a quotient of turbine speed (n_T) and
pump speed (n_P);
- characteristic of an efficiency of the torque converter or the hydrodynamic clutch as a
function of the speed ratio (nue);
- characteristic of an efficiency of the torque converter or the hydrodynamic clutch as a
function of a turbine speed (n_T).

5. Control system according to claim 4, **characterized in that** the turbine speed (n_t) or the temporal turbine speed course (n_T(t)) or the turbine speed gradient (dn_T/dt) is a function of the distance to the synchronization point of the closing process of the slipping clutch or brake.

6. A control system for a transmission with a torque converter or a hydrodynamic clutch in a motor vehicle, with at least one clutch or brake transmitting torque during the starting process of the vehicle, with the starting output of the motor vehicle being controlled as a function of the driver's request via a slipping clutch or brake arranged in the transmission, **characterized in that** during driveaway of the motor vehicle a speed (v_veh) of the vehicle or an output speed (n_out) of the transmission is controlled as a function of the driver's request via a slipping clutch or brake arranged in the transmission,
and with additional integration of one or several of the following parameters of the torque converter or the hydrodynamic clutch:
- type of torque converter or type of hydrodynamic clutch;
- maximum torque amplification (mue_max) of the torque converter;
- pump torque (M_P2000) of the torque converter with an engine speed of 2000 rpm;
- characteristic (M_P=f(n_P)) of a pump torque (M_P) as a function of a pump speed (n_P);
- characteristic (M_T=f(n_T)) of a turbine torque (M_T) as a function of a turbine speed
(n_T);
- characteristic (M_P=f(n_T)) of a pump speed (n_P) as a function of a turbine speed
(n_T);
- characteristic (mue = f(nue)) of a torque ratio (mue) as a function of a speed ratio (nue), with
the torque ratio (mue) being defined as a quotient of turbine torque (M_T) and pump torque
(M_P), and with the speed ratio (nue) being defined as a quotient of turbine speed (n_T) and
pump speed (n_P);
- characteristic of an efficiency of the torque converter or the hydrodynamic clutch as a
function of the speed ratio (nue);
- characteristic of an efficiency of the torque converter or the hydrodynamic clutch as a
function of a turbine speed (n_T).

7. A control system according to one or several of the preceding claims, **characterized in that** a nominal speed value (v_veh_nom) of the vehicle, especially its temporal course (v_veh_nom(t)), is generated for clutch or brake control on the basis of the driver's request.

8. A control system according to one or several of the preceding claims, **characterized in that** a nominal output speed value (n_out_nom) of the transmission, especially a temporal output speed value course (n_out_nom(t)) and/or a nominal output speed gradient (dn_out_nom/dt). is generated for clutch or brake control on the basis of the driver's request.

9. A control system according to one or several of the preceding claims, **characterized in that** a nominal engine speed value (n_mot_nom), especially a temporal nominal engine speed course (n_mot_nom(t)) and or a nominal engine speed gradient (dn_mot_nom/dt), of an engine driving the transmission is generated for clutch or brake control on the basis of the driver's request.

## Revendications

1. Système de commande pour une transmission avec un convertisseur de couple ou un embrayage hydrodynamique dans un véhicule automobile, avec au moins un embrayage ou un frein contrôlant le couple lors du processus de démarrage du véhicule, la puissance de démarrage du véhicule étant régulée en fonction des exigences du conducteur par l'intermédiaire d'un embrayage ou d'un frein glissant disposé dans la transmission, **caractérisé en ce que**, lors du démarrage du véhicule, un rapport de vitesse de rotation (nue) du convertisseur de couple ou de l'embrayage hydrodynamique est régulé en fonction des exigences du conducteur par l'intermédiaire de l'embrayage ou du frein glissant disposé dans la transmission, le rapport de vitesse de rotation dépendant :
- d'un rapport entre la vitesse de rotation d'une turbine (n_T) et la vitesse de rotation d'une pompe (n_P) du convertisseur de couple et/ou
- du type de convertisseur et/ou
- de la température
en prenant en compte, en outre, d'une ou plusieurs des grandeurs caractéristiques suivantes du convertisseur de couple ou de l'embrayage hydrodynamique:
- le type de convertisseur de couple ou le type d'embrayage hydrodynamique,
- l'amplification maximale du couple (mue_max) du convertisseur de couple,
- le couple de la pompe (M_P2000) du convertisseur de couple lors d'une vitesse de rotation d'entraînement de 2000 1/min,
- la courbe caractéristique (M_P = f(n_P)) du couple de la pompe (M_P) en fonction de la vitesse de rotation de la pompe (n_P),
- la courbe caractéristique (M_T = f(n_T)) du couple d'une turbine (M_T) en fonction de la vitesse de rotation de la turbine (n_T),
- la courbe caractéristique (M_P = f(n_T) de la vitesse de rotation d'une pompe (n_P) en fonction de la vitesse de rotation d'une turbine (n_T),
- la courbe caractéristique (mue = f(nue)) d'un rapport de couple (mue) en fonction d'un rapport de vitesse de rotation (nue), le rapport de couple (mue) étant défini comme le rapport entre le couple de la turbine (M_T) et le couple de la pompe (M_P) et
- le rapport de vitesse de rotation (nue) étant défini comme le rapport entre la vitesse de rotation de la turbine (n_T) et la vitesse de rotation de la pompe (n_P),
- la courbe caractéristique du rendement du convertisseur de couple ou de l'embrayage hydrodynamique en fonction du rapport de vitesse de rotation (nue),
- la courbe caractéristique du rendement du convertisseur de couple ou de l'embrayage hydrodynamique en fonction de la vitesse de rotation de la pompe (n_T).

2. Système de commande selon la revendication 1, **caractérisé en ce que**, lors de la régulation du rapport de vitesse de rotation (nue), une valeur de consigne de la vitesse de rotation (n_Mot_soll) ou un tracé de consigne de la vitesse de rotation en fonction du temps (n_Mot_soll(t)) est prédéterminé.

3. Système de commande selon la revendication 1 ou 2, **caractérisé en ce que** la température est déterminée à partir de la température de l'huile de la transmission et/ou de la température de l'huile du moteur et/ou de la température du fluide de refroidissement du moteur et/ou de la température de l'air et/ou d'une température fictive calculée selon un modèle.

4. Système de commande pour une transmission avec un convertisseur de couple ou un embrayage hydrodynamique dans un véhicule automobile, avec au moins un embrayage contrôlant le couple lors du processus de démarrage du véhicule, la puissance de démarrage du véhicule étant régulée selon les exigences du conducteur par l'intermédiaire d'un embrayage ou d'un frein glissant disposé dans la transmission, **caractérisé en ce que**,
lors du démarrage du véhicule, la vitesse de rotation d'une turbine (n_T) du convertisseur de couple ou de l'embrayage hydrodynamique ou un tracé de la vitesse de rotation de la turbine en fonction du temps (n_T(t)) ou un gradient de vitesse de rotation de la turbine (dn_T/dt) est régulé en fonction des exigences du conducteur par l'intermédiaire de l'embrayage ou du frein glissant disposé dans la transmission,
en prenant en compte une ou plusieurs des grandeurs caractéristiques suivantes du convertisseur de couple ou de l'embrayage hydrodynamique :
- le type de convertisseur de couple ou le type d'embrayage hydrodynamique,
- l'amplification maximale du couple (mue_max) du convertisseur de couple,
- le couple de la pompe (M_P2000) du convertisseur de couple lors d'une vitesse de rotation d'entraînement de 2000 1/min,
- la courbe caractéristique (M_P = f(n_P)) du couple de la pompe (M_P) en fonction de la vitesse de rotation de la pompe (n_P),
- la courbe caractéristique (M_T = f(n_T)) du couple d'une turbine (M_T) en fonction de la vitesse de rotation de la turbine (n_T),
- la courbe caractéristique (M_P = f(n_T) de la vitesse de rotation d'une pompe (n_P) en fonction de la vitesse de rotation d'une turbine (n_T),
- la courbe caractéristique (mue = f(nue)) d'un rapport de couple (mue) en fonction d'un rapport de vitesse de rotation (nue), le rapport de couple (mue) étant défini comme le rapport entre le couple de la turbine (M_T) et le couple de la pompe (M_P), et
le rapport de vitesse de rotation (nue) étant défini comme le rapport entre la vitesse de rotation de la turbine (n_T) et la vitesse de rotation de la pompe (n_P),
- la courbe caractéristique du rendement du convertisseur de couple ou de l'embrayage hydrodynamique en fonction du rapport de vitesse de rotation (nue),
- la courbe caractéristique du rendement du convertisseur de couple ou de l'embrayage hydrodynamique en fonction de la vitesse de rotation de la pompe (n_T).

5. Système de commande selon la revendication 4, **caractérisé en ce que** la vitesse de rotation de la turbine (n_t) ou le tracé de la vitesse de rotation de la turbine en fonction du temps (n_T(t)) ou le gradient de vitesse de rotation de la turbine (dn_T/dt) dépend de la distance avec le point synchrone du processus de fermeture de l'embrayage ou du frein glissant.

6. Système de commande pour une transmission avec un convertisseur de couple ou un embrayage hydrodynamique dans un véhicule automobile, avec au moins un embrayage contrôlant le couple lors du processus de démarrage du véhicule, la puissance de démarrage du véhicule étant régulée selon les exigences du conducteur par l'intermédiaire d'un embrayage ou d'un frein glissant disposé dans la transmission, **caractérisé en ce que**,
lors du démarrage du véhicule, une vitesse (v_Fzg) du véhicule ou une vitesse de rotation de sortie (n_ab) de la transmission est régulée par l'intermédiaire de l'embrayage ou du frein glissant en fonction des exigences du conducteur,
en prenant en compte une ou plusieurs des grandeurs caractéristiques suivantes du convertisseur de couple ou de l'embrayage hydrodynamique:
- le type de convertisseur de couple ou le type d'embrayage hydrodynamique,
- l'amplification maximale du couple (mue_max) du convertisseur de couple,
- le couple de la pompe (M_P2000) du convertisseur de couple lors d'une vitesse de rotation d'entraînement de 2000 1/min,
- la courbe caractéristique (M_P = f(n_P)) du couple de la pompe (M_P) en fonction de la vitesse de rotation de la pompe (n_P),
- la courbe caractéristique (M_T = f(n_T)) du couple d'une turbine (M_T) en fonction de la vitesse de rotation de la turbine (n_T),
- la courbe caractéristique (M_P = f(n_T) de la vitesse de rotation d'une pompe (n_P) en fonction de la vitesse de rotation d'une turbine (n_T),
- la courbe caractéristique (mue = f(nue)) d'un rapport de couple (mue) en fonction d'un rapport de vitesse de rotation (nue), le rapport de couple (mue) étant défini comme le rapport entre le couple de la turbine (M_T) et le couple de la pompe (M_P) et le rapport de vitesse de rotation (nue) étant défini comme le rapport entre la vitesse de rotation de la turbine (n_T) et la vitesse de rotation de la pompe (n_P),
- la courbe caractéristique du rendement du convertisseur de couple ou de l'embrayage hydrodynamique en fonction du rapport de vitesse de rotation (nue).
- la courbe caractéristique du rendement du convertisseur de couple ou de l'embrayage hydrodynamique en fonction de la vitesse de rotation de la pompe (n_T).

7. Système de commande selon l'une ou plusieurs des revendications précédentes, **caractérisé en ce que**, pour la régulation de l'embrayage ou du frein selon les exigences du conducteur, une valeur de consigne de la vitesse (v_Fzg_soll) du véhicule est déterminée, plus particulièrement son tracé en fonction du temps (v_Fzg_soll(t)).

8. Système de commande selon l'une ou plusieurs des revendications précédentes, **caractérisé en ce que**, pour la régulation de l'embrayage ou du frein selon les exigences du conducteur, une valeur de consigne de la vitesse de rotation de sortie (n_Ab_soll) de la transmission est déterminée, plus particulièrement un tracé de consigne en fonction du temps de la vitesse de rotation de sortie (n_Ab_soll(t)) et/ou un gradient de consigne de la vitesse de rotation de sortie (dn_ab_soll/dt).

9. Système de commande selon l'une ou plusieurs des revendications précédentes, **caractérisé en ce que**, pour la régulation de l'embrayage ou du frein selon les exigences du conducteur, une valeur de consigne de la vitesse de rotation du moteur (n_Mot_soll) d'un moteur entraînant la transmission, est déterminée, plus particulièrement un tracé de consigne en fonction du temps de la vitesse de rotation du moteur (n_Mot_soll(t)) et/ou un gradient de consigne de la vitesse de rotation du moteur (dn_Mot_soll/dt).
